# NEUE EUROPÄISCHE PATENTSCHRIFT

(11) **EP 0 703 148 B2**
(45) Veröffentlichungstag und Bekanntmachung des Hinweises auf die Entscheidung über den Einspruch: **17.10.2001**
(45) Hinweis auf die Patenterteilung: 15.10.1997
(21) Anmeldenummer: 95111961.9
(22) Anmeldetag: 29.07.1995
(51) Int. Cl.: B65B 57/20, B65B 35/04, B65G 47/08

(54) **Verfahren und Vorrichtung zum Handhaben von zylindrischen Gegenständen, insbesondere Keksrollen**
Method and device for handling cylindrical objects, especially biscuit rolls
Procédé et dispositif pour la manipulation d'objets cylindriques, spécialement des rouleaux de biscuits

(30) Priorität: 22.09.1994 DE 4433808
(43) Veröffentlichungstag der Anmeldung: 27.03.1996
(73) Patentinhaber: Focke & Co. (GmbH & Co.), 27283 Verden (DE)
(72) Erfinder: Focke, Heinz, D-27283 Verden (DE); Kramer, Johann, D-26676 Barssel (DE)
(74) Vertreter: Bolte, Erich, Dipl.-Ing.

(56) Entgegenhaltungen:
- CH-A- 432 372
- DE-A- 2 640 867
- GB-A- 2 025 347
- US-A- 2 744 608
- US-A- 3 325 966
- US-A- 3 330 402
- US-A- 5 269 646

## Beschreibung

Die Erfindung betrifft ein Verfahren zum Handhaben von zylindrischen Gegenständen, nämlich Rollen, die auf einem Zuförderer queraxial transportiert und vor einem Teilungsorgan auf Dichtlage gestaut werden, wobei durch das Teilungsorgan Gruppen, nämlich Rollen-Gruppen, von in Dichtlage nebeneinander angeordneten Rollen gebildet und einem Abförderer zugeführt werden.

Die Erfindung betrifft weiterhin eine Vorrichtung zum Handhaben von zylindrischen Gegenständen, nämlich Rollen, mit einem Zuförderer auf dem die Rollen queraxial transportierbar sind, mit einem Teilungsorgan, vor dem die Rollen auf Dichtlage staubar und durch das Rollen-Gruppen mit einer bestimmten Anzahl von dicht aneinanderliegenden Rollen aufteilbar sind, und mit einem Abförderer, dem die Rollen-Gruppen zuführbar sind.

Das eingangs genannte Verfahren und die Vorrichtung sind bekannt aus US 3 325 966. Außerdem ist aus der DE 26 40 867 A eine Vorrichtung zur Handhabung von Packungs-Gruppen mit einem Zwischenspeicher bekannt.

Die verpackungstechnische Handhabung von runden Gegenständen bereitet wegen der instabilen Lage besondere Probleme. Zylindrische Verpackungen für Kekse (Keksrollen) sind ein Beispiel für dieses häufig auftretende Verpackungsgut. Es geht darum, die Keksrollen etc. in Lagen aus neben- und übereinander angeordneten Gegenständen für die Verpackung in Kartons zu formieren.

Der Erfindung liegt die Aufgabe zugrunde, Maßnahmen für eine geordnete, störungsfreie und leistungsfähige Handhabung, nämlich Förderung und Speicherung, derartiger zylindrischer Gegenstände vorzuschlagen, durch die gewährleistet ist, dass die Gegenstände selbst bzw. deren Verpackungen (Umhüllungen) schonend behandelt werden.

Zur Lösung dieser Aufgabe ist das erfindungsgemäße Verfahren durch die Merkmale des Anspruchs 1 und die erfindungsgemäße Vorrichtung durch die Merkmale des Anspruchs 2 definiert.

Die Anzahl der Gegenstände einer Gruppe bzw. Rollen-Gruppe entspricht der Anzahl einer Lage von Gegenständen bzw. Rollen innerhalb des Speichers. Je nach fördertechnischer Situation wird eine Rollen-Gruppe in den Speicher eingefördert oder an diesen vorbei einer Stapelstation bzw. einer anderen Station zur Weiterverarbeitung zugeführt. Die dritte Alternative besteht darin, daß Rollen-Gruppen dem Speicher entnommen und in den Förderprozeß zurückgeführt werden.

Die erfindungsgemäße Vorrichtung besteht aus einem Zuförderer für die Zuführung der Gegenstände bzw. Rollen in queraxialer Stellung, aus einem steuerbaren Teilungsorgan, insbesondere Teilungsrad, welches die Rollen einzeln erfaßt, absondert und zu einer Rollen-Gruppe formiert, wobei die so gebildete Rollen-Gruppe durch einen an das Teilungsorgan anschließenden Zwischenförderer entweder dem Speicher oder einem nachfolgenden Abförderer zuführbar ist.

Das Teilungsorgan bzw. Teilungsrad läuft in vertikaler Ebene drehend um und ist am Außenumfang mit Aufnahmen, insbesondere teilzylindrischen Mulden für je eine Rolle versehen. Durch entsprechende Steuerung des Teilungsrades wird die Anzahl der Rollen einer Rollen-Gruppe von einem nachfolgenden Strang der Rollen abgesondert und an den Zwischenförderer übergeben. Nachfolgend wird die so gebildete Rollen-Gruppe aus dicht nebeneinander positionierten Rollen weitergefördert.

Weitere Einzelheiten der Erfindung betreffen den Aufbau der Gesamtanlage sowie die Ausbildung des Teilungsorgans. Schließlich befassen sich weitere Merkmale der Erfindung mit Einzelheiten für die Steuerung der Vorrichtung.

Ein Ausführungsbeispiel der Vorrichtung wird nachfolgend anhand der Zeichnungen näher erläutert.

Es zeigt:

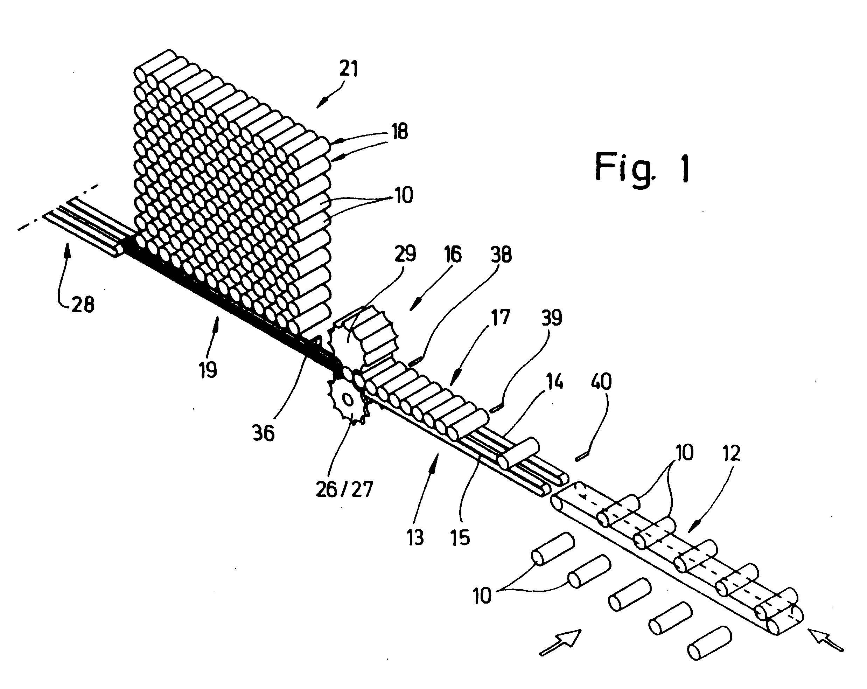

- Fig. 1: einen Teilbereich der Vorrichtung für den Transport von Rollen in vereinfachter, perspektivischer Ansicht,

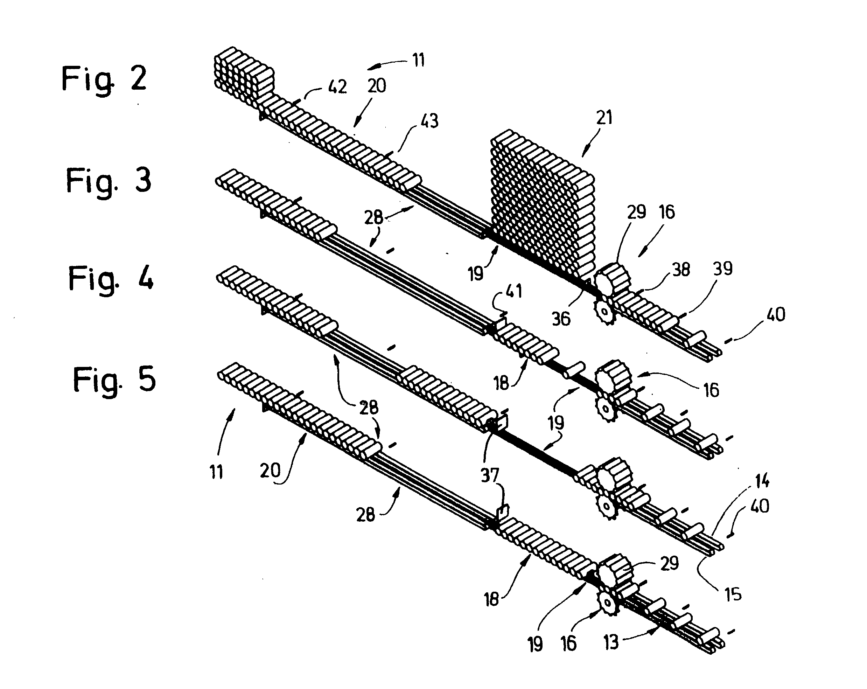

- Fig. 2 bis Fig. 5: Darstellungen entsprechend Fig. 1 in unterschiedlichen Betriebsphasen,
- Fig. 6: einen Bereich der Vorrichtung mit Teilungsorgan in Seitenansicht bzw. im Vertikalschnitt bei vergröβertem Maßstab,

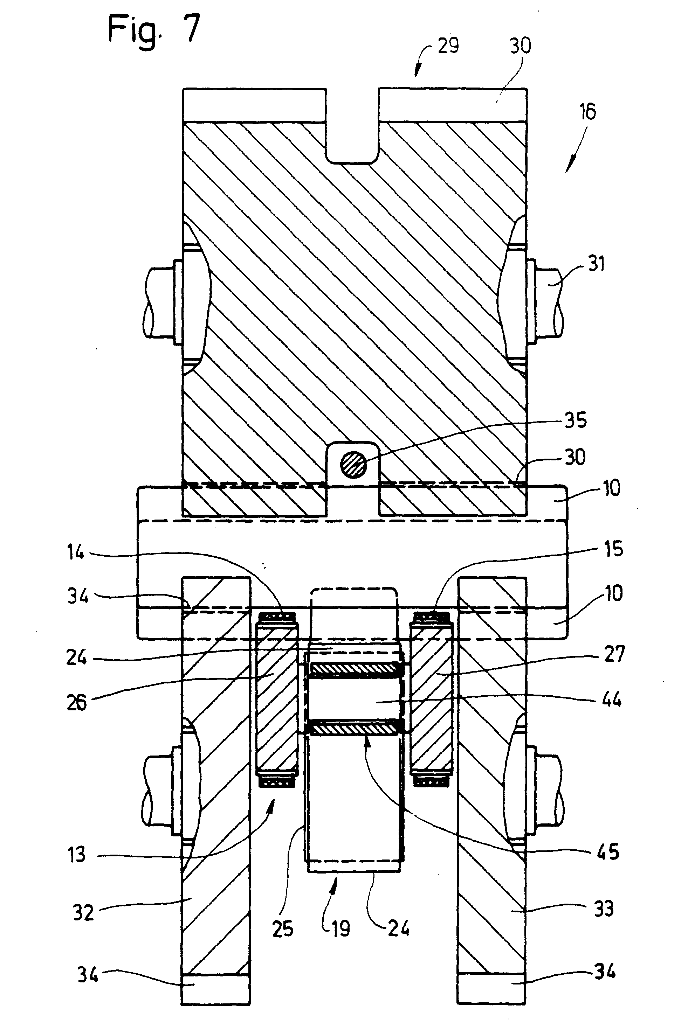

- Fig. 7: die Einzelheit gemäß Fig. 6 in einem Querschnitt der Schnittebene VII-VII in nochmals vergrößertem Maßstab.

Bei dem gezeigten Ausführungsbeispiel einer Vorrichtung geht es um die Handhabung von zylindrischen Gegenständen, nämlich (Keks-)Rollen 10. Diese sollen von einer Verpackungsmaschine kommend einer Stapelstation 11 zugeführt werden. Dort werden die Rollen 10 in Lagen übereinander formiert als Inhalt einer Großpackung (Karton).

Bei dem vorliegenden Ausführungsbeispiel werden die Rollen 10 entsprechend dem Fertigungsprozeß in axialer Richtung zugeführt, beispielsweise von mehreren Verpackungsmaschinen kommend, und auf einem Vorförderer 12 abgelegt. Dieser ist als endloser Fördergurt ausgebildet, auf dessen Obertrum die Rollen 10 mit der Längsachse quer zur Förderrichtung positioniert sind.

Von dem Vorförderer 12 werden die Rollen 10 an einen Zuförderer 13 übergeben, der im vorliegenden Falle aus zwei im Abstand voneinander angeordneten, parallelen Gurten 14 und 15 besteht. Die Rollen 10 liegen queraxial auf bei den Gurten 14, 15 bzw. auf einem oberen Fördertrum derselben.

Durch den Zuförderer 13 werden die Rollen 10 einem besonderen Organ der Vorrichtung zugeführt, nämlich einem Teilungsorgan 16. Vor diesem wird eine Dichtlage 17 der Rollen 10 gebildet. Das Teilungsorgan 16 übernimmt eine bestimmte, vorgegebene und einstellbare Anzahl von Rollen 10 und legt sie als Gruppe, nämlich als Rollen-Gruppe 18 auf einem anschließenden Förderer, hier auf einem Zwischenförderer 19, ab.

Im Anschluß an das Teilungsorgan 16 werden die Rollen 10 stets nur in der Formation als Rollen-Gruppe 18 transportiert bis zur Bildung einer erneuten Dichtlage 20 im Bereich der Stapelstation 11. Die Rollen-Gruppen 18 werden bis zum Anschluß an die Dichtlage 20 mit Abstand voneinander gefördert. Innerhalb einer Rollen-Gruppe 18 liegen die Rollen 10 dicht aneinander mit wechselseitiger Berührung ihrer Mantelflächen.

Die Anzahl der Rollen 10 einer Rollen-Gruppe 18 ist vorgegeben durch die Ausgestaltung bzw. Kapazität eines Speichers 21. Dieser dient zur zeitweiligen Aufnahme einer größeren Anzahl von Rollen 10 und Abgabe derselben je nach Bedarf, nämlich zum Ausgleich von Förderschwankungen. Der Speicher 21 kann in unterschiedlicher Weise ausgebildet sein. Im vorliegenden Falle handelt es sich um einen im Prinzip bekannten Speicher 21 mit zu beiden Seiten der Förderbahn der Rollen 10 angeordneten winkelförmigen Tragprofilen 22. Diese sind jeweils paarweise einander gegenüberliegend positioniert, wobei die Rollen 10 mit ihren Enden auf horizontalen Tragschenkeln 23 der Tragprofile 22 aufliegen. Diese sind an endlosen aufrechten Förderorganen, zum Beispiel Gurten, angebracht. Jedes Paar von Tragprofilen 22 nimmt eine komplette Rollen-Gruppe 18 als Speicherlage auf und fördert diese in Aufwärts- oder Abwärtsrichtung. Die Tragprofile 22 sind zu bei den Seiten des Zwischenförderers 19 angeordnet, so daß die seitlich über den Zwischenförderer 19 hinwegragenden Rollen 10 der jeweiligen Rollen-Gruppe 18 frei durch die Tragprofile 22 erfaßt werden können.

Der Zwischenförderer 19, der unterhalb des Speichers 21 verläuft, besteht aus einem einzelnen Förderband 24. Dieses ist an den Enden jeweils über eine Umlenkrolle 25 geführt, die versetzt zu Umlenkrädern 26, 27 für die Gurte 14, 15 des Zuförderers 13 gelagert ist. Die beiden Umlenkräder 26 und 27 sitzen auf einer Achse 44, die ihrerseits in einem Lager 45 drehbar ist.

An den Zwischenförderer 19 schließt im vorliegenden Falle ein Abförderer 28 an. Dieser besteht wiederum aus zwei im Abstand voneinander angeordneten Gurten. Zwischen diesen endet der Zwischenförderer 19 zur Übergabe der Rollen 10 an den Abförderer 28.

Das Teilungsorgan 16 ist in besonderer Weise ausgebildet. Es besteht zum einen aus einem Verteilerrad 29 in zylindrischer Ausführung mit längs des Umfangs angeordneten Aufnahmen, nämlich teilzylindrischen Mulden 30 für je eine Rolle 10. Form und Abmessungen der Mulden 30 sind an die der Rollen 10 angepaßt, so daß diese formschlüssig erfaßt werden.

Das Teilungsrad 29 ist oberhalb der Bewegungsbahn der Rollen 10 auf einer quergerichteten Welle 31 gelagert, und zwar im Bereich des Übergangs des Zuförderers 13 zum Zwischenförderer 19. Die axiale Abmessung des Teilungsrades 29 ist etwas kleiner als die der Rollen 10, so daß diese an bei den Seiten überstehen.

Mit dem Verteilerrad 29 arbeitet ein Gegenorgan unterhalb der Bewegungsbahn der Rollen 10 zusammen. Bei diesem handelt es sich hier um zwei angeordnete Teilungsscheiben 32, 33. Die beiden mit Abstand voneinander angeordneten, nämlich in Ebenen zu beiden Seiten des Zuförderers 13 und des Zwischenförderers 19 angeordneten Teilungsscheiben 32, 33 sind gleichachsig gelagert und werden in gleicher Weise angetrieben, und zwar in exakter Abstimmung mit der Drehbewegung des Teilungsrades 29. Die Teilungsscheiben 32, 33 sind längs des Umfangs mit Gegenaufnahmen, nämlich teilzylindrischen Gegenmulden 34 versehen. Auch diese umfassen die Rollen 10 während der Übergabe vom Zuförderer 13 an den Zwischenförderer 19 formschlüssig am Umfang.

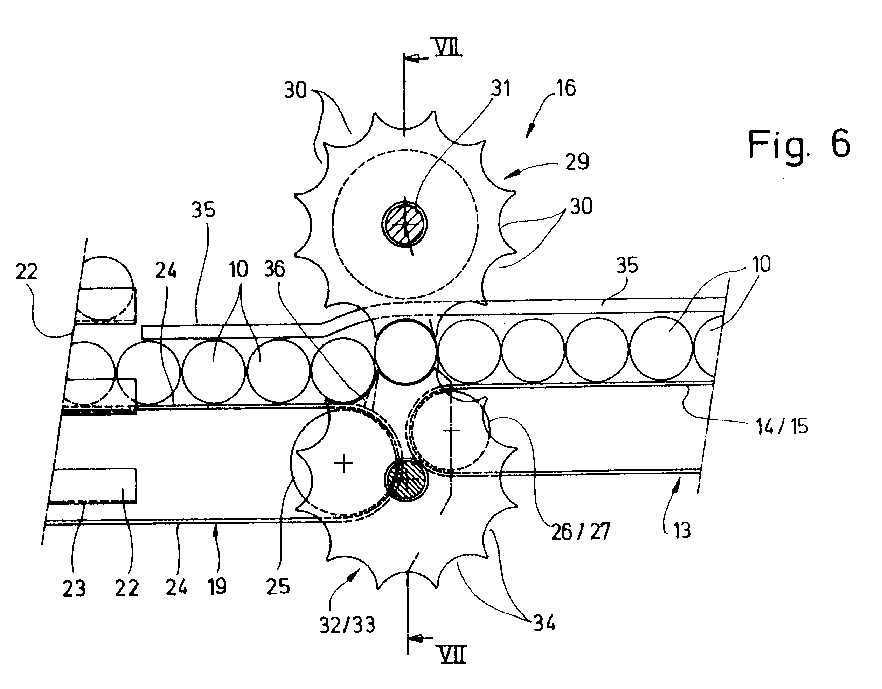

Das Teilungsrad 29 und die Teilungsscheiben 32, 33 sind bei dem vorliegenden Beispiel in einer gemeinsamen, vertikalen Querebene gelagert (Fig. 6). Die Relativstellung ist derart, daß während einer Phase der Förderbewegung die Rollen 10 einerseits in einer Mulde 30 des Teilungsrades 29 und gegenüberliegend in Gegenmulden 34 der Teilungsscheiben 32, 33 liegen, also an zwei einander gegenüberliegenden Seiten formschlüssig erfaßt sind (Fig. 6). Die Teilungsscheiben 32, 33 sind dabei so positioniert, daß sie im weiteren Bewegungsablauf die Rollen 10 an den Zwischenförderer 19 übergeben und auf diesem ablegen.

Die Relativstellung von Zuförderer 13 und Zwischenförderer 19 ist derart, daß die Förderebene des letzteren geringfügig tiefer liegt als die des Zuförderers 13. Es ergibt sich demnach ein geringfügiger, abwärts gerichteter Versatz der Förderbahn vom Zuförderer 13 zum Zwischenförderer 19. Oberhalb der Rollen 10 ist mindestens in diesem Bereich eine Oberführung vorgesehen, nämlich hier eine mittige Führungsstange 35, die der Kontur der Bewegungsbahn der Rollen 10 folgt und eine unerwünschte Aufwärtsbewegung einzelner Rollen 10 verhindert.

Das Teilungsorgan 16 wird hinsichtlich des Antriebs so gesteuert, daß die Rollen-Gruppen 18 mit im vorliegenden Falle vierzehn Rollen 10 von der Dichtlage 17 abgesondert und als Einheit weitertransportiert werden. Das Teilungsrad 29 wird vorzugsweise durch einen frequenzgeregelten Antriebsmotor mit Drehgeber angetrieben. Dieser bewirkt, daß das Teilungsrad 29 nach Erfassen und Weiterfördern der vierzehnten Rolle 10 zeitweilig angehalten wird, während die Rollen-Gruppe 18 durch den Zwischenförderer 19 weitergefördert wird. Die Teilungsscheiben 32, 33 werden exakt synchron mit dem Teilungsrad 29 angetrieben.

Der Zwischenförderer 19 ist in besonderer Weise ausgebildet, um die Rollen-Gruppen 18 zu handhaben. Der endlose Zwischenförderer 19 bzw. dessen Förderband 24 ist mit mindestens einem Mitnehmer 36 versehen. Dieser erfaßt eine von dem Teilungsorgan 16 abgegebene Rollen-Gruppe 18 an der Rückseite, nämlich an der letzten Rolle 10. Es wird dadurch gewährleistet, daß beim Weitertransport der Rollen-Gruppe 18 im Bereich des Zwischenförderers 19 die Gruppenformation erhalten bleibt.

Der Antrieb des Zwischenförderers 19 ist exakt auf die Bewegung des Teilungsorgans 16 abgestimmt, derart, daß ein Mitnehmer 36 unmittelbar nach Fertigstellung einer Rollen-Gruppe 18 vom unteren Trum des Förderbandes 24 über die Umlenkrolle 25 zur Oberseite gelangt und dadurch die Rolle-Gruppe 18 an der Rückseite erfassen kann.

Wenn eine Rollen-Gruppe 18 in den Speicher 21 eingeführt werden soll, wird der Zwischenförderer 19 so angehalten, daß die Rollen-Gruppe 18 positionsgenau von dem Speicher 21 aufgenommen werden kann. In diesem Falle wird auch eine ortsfeste Sperre am Vorderende der Rollen-Gruppe 18 wirksam. Es handelt sich dabei um einen Anschlag 37, der in die Bewegungsbahn der Rollen 10 von oben her einführbar ist, um die exakte Position der Rollen-Gruppe 18 in bezug auf den Speicher 21 zu definieren. Wenn eine Rollen-Gruppe 18 an dem Speicher 21 vorbeitransportiert wird unmittelbar zur Stapelstation 11, ist der Anschlag 37 aus der Bewegungsbahn der Rollen 10 zurückgezogen.

Die Fördergeschwindigkeiten der einzelnen Förderorgane sind aufeinander abgestimmt. Bei einer Fertigung bzw. Zufuhr von beispielsweise 160 Rollen 10 pro min. wird der Zuführförderer 13 mit einer Geschwindigkeit von etwa 50 m/min, angetrieben. Dabei wird die Dichtlage 17 aufgebaut und aufrechterhalten. Das Teilungsrad 29 ist bei einer Ausbildung mit zwölf Mulden 30 mit einer Geschwindigkeit von 27 U/min. angetrieben. Dies entspricht einer Einlaufgeschwindigkeit von 23 m/min.

Der Zwischenförderer 19 wird mindestens während der Bildung der Rollen-Gruppe 18 mit gleicher Geschwindigkeit angetrieben, also im vorliegenden Beispiel mit 23 m/min. Auch der Zwischenförderer 19 ist zweckmäßigerweise durch einen frequenzgeregelten Antriebsmotor mit Drehgeber angetrieben, um eine exakte Abstimmung der Bewegungscharakteristik zu ermöglichen.

Der Abförderer 28 wird bei dem beschriebenen Ausführungsbeispiel mit einer Geschwindigkeit von 50 m/min angetrieben.

Wenn aufgrund der Betriebssituation Rollen-Gruppen 18 dem Speicher 21 entnommen werden, wird während dieser Phase das Teilungsorgan 16 angehalten, mindestens für die Dauer der Rückführung einer Rollen-Gruppe 18. Nach Ablegen derselben auf dem Zwischenförderer 19 wird dieser zweckmäßigerweise mit erhöhter Geschwindigkeit von 50 m/min. angetrieben. Danach wird dann in den meisten Fällen wieder das Teilungsorgan 16 wirksam.

Die Funktionsabläufe der Vorrichtung werden durch Sensoren überprüft, insbesondere durch optoelektrische Sensoren.

Im Bereich des Zuförderers 13 sind im vorliegenden Fall drei Sensoren 38, 39, 40 positioniert. Diese dienen zur Überwachung der Dichtlage 17.

Der Sensor 38 bewirktein Stillsetzen des Teilungsorgans 16, wenn der Sensor 38 durch fehlende Rollen 10 freikommt. Es fehlt dann an der ausreichenden Nachlieferung von Rollen 10.

Sensor 39 überwacht die Maximalgröße der Dichtlage 17. Zum Abbau derselben wird das Teilungsorgan 16 - und entsprechend der Zwischenförderer 19 - kurzzeitig mit höherer Geschwindigkeit angetrieben, um die größer werdende Dichtlage 17 abzubauen. Ist der Sensor 39 für längere Zeit "belegt", wird die Vorrichtung abgeschaltet.

Sensor 40 wird wirksam nach zeitweiligem Abschalten der Vorrichtung. Wenn dann zur Wiederaufnahme des Betriebs Rollen 10 zugeführt werden, bewirkt Sensor 40 das Einschalten des Vorförderers 13.

Im Bereich des Speichers 21 bzw. des Zwischenförderers 19 ist ein Sensor 41 positioniert. Dieser schaltet den Speicher 21 ein, wenn zur Aufnahme eine Rollen-Gruppe 18 positioniert ist

Im Bereich der Stapelstation 11 bzw. der Dichtlage 20 befinden sich Sensoren 42 und 43, die die minimale (Sensor 42) und maximale (Sensor 43) Größe der Dichtlage 20 überwachen.

## Patentansprüche

1. Verfahren zum Handhaben von zylindrischen Gegenständen, nämlich Rollen (10), die auf einem Zuförderer (13) queraxial transportiert und vor einem Teilungsorgan (16) auf Dichtlage (17) gestaut werden, wobei durch das Teilungsorgan (16) Gruppen, nämlich Rollen-Gruppen (18), von in Dichtlage (17) nebeneinander angeordneten Rollen (10) gebildet und einem Abförderer (28) zugeführt werden, wobei
a) eine durch das Teilungsorgan (16) gebildete Rollen-Gruppe (18) von einem an das Teilungsorgan (16) anschließenden Zwischenförderer (19) transportiert wird;
b) die Rollen-Gruppe (18) dem an den Zwischenförderer (19) anschließenden Abförderer (28) übergeben wird;
c) Rollen-Gruppen (18) zum Ausgleich von Förderschwankungen bedarfsweise in einen oberhalb des Zwischenförderers (19) angeordneten Speicher (21) eingefördert und bedarfsweise aus dem Speicher (21) entnommen werden;
d) das Teilungsorgan (16) eine bestimmte, vorgegebene und einstellbare Anzahl von Rollen (10) übernimmt und sie als RollenGruppe (18) auf dem Zwischenförderer ablegt; und wobei
e) die Rollen-Gruppen (18) in dem Speicher (21) übereinander positioniert werden, wobei jede lage im Speicher (21) einer Kompletten Rollen-Gruppe (18) entspricht.

2. Vorrichtung zum Handhaben von zylindrischen Gegenständen, nämlich Rollen (10), mit einem Zuförderer (13), auf dem die Rollen (10) queraxial transportierbar sind, mit einem Teilungsorgan (16), vor dem die Rollen (10) auf Dichtlage (17) staubar sind, und durch das Rollen-Gruppen (18) mit einer bestimmten Anzahl von dicht aneinander liegenden Rollen (10) gebildet werden, und mit einem Abförderer (28), dem die Rollen-Gruppen (18) Zuführbar sind, mit folgenden Merkmalen :
a) an das Teilungsorgan (16) schließt ein Zwischenförderer (19) an zur Aufnahme der jeweils durch das Teilungsorgan (16) gebildeten Rollen-Gruppe (18), wobei der Zwischenförderer (19) zwischen dem Teilungsorgan (16) und dem Abförderer (28) verläuft ;
b) oberhalb des Zwischenförderers (19) ist ein Speicher (21) angeordnet, in den Rollen-Gruppen (18) zum Ausgleich von Förderschwankungen bedarfsweise einführbar sind, und dem bedarfsweise Rollen-Gruppen (18) entnehmbar sind.
c) das Teilungsorgan (16) übernimmt eine bestimmte, vorgegebene und einstellbare Anzahl von Rollen (10) und legt sie als Rollen-Gruppe (18) auf dem Zwischenförderer (19) ab,
d) die von dem Teilungsorgan (16) gebildeten Rollen-Gruppen (18) sind als Einheit durch den Zwischenförderer (19) alternativ dem Speicher (21) zur Aufnahme der Rollen-Gruppe (18) oder dem Abförderer (28) zuführbar.

3. Vorrichtung nach Anspruch 2, **dadurch gekennzeichnet, daß** das Teilungsorgan (16) aus einem gesteuert antreibbaren Teilungsrad (29) mit Aufnahmen, insbesondere Mulden (30), zum Erfassen je einer Rolle (10) besteht, wobei das Teilungsrad (29) nacheinander Rollen (10) von der Dichtlage (17) abteilt bis zur Bildung einer Rollen-Gruppe (18) und daß das Teilungsrad (29) danach kurzzeitig stillsteht.

4. Vorrichtung nach Anspruch 3 oder einem der weiteren Ansprüche, **dadurch gekennnzeichnet, daß** das oberhalb der Bewegungsbahn der Rollen (10), insbesondere im Bereich des Übergangs zwischen dem Zuförderer (13) und dem Zwischenförderer (19) drehbar gelagerte Teilungsrad (29) mit einem an der Unterseite der Bewegungsbahn der Rollen (10) angeordneten Gegenorgan zusammen arbeitet, insbesondere mit zwei im Abstand voneinander angeordneten Teilungsscheiben (32, 33), die längs des Umfangs mit Gegenmulden (34) zur Aufnahme der Rollen (10) versehen sind.

5. Vorrichtung nach Anspruch 2 oder einem der weiteren Ansprüche, **dadurch gekennzeichnet, daß** die Rollen (10) durch das Teilungsorgan (16) vom Zuförderer (13) an den Zwischenförderer (19) überführbar sind, wobei vorzugsweise die Förderebene für die Rollen im Bereich des Zwischenförderers (19) geringfügig tiefer gelegt ist als die Förderebene im Bereich des Zuförderers (13).

6. Vorrichtung nach Anspruch 2 oder einem der weiteren Ansprüche, **dadurch gekennzeichnet, daß** der Zwischenförderer (19) wenigstens einen Mitnehmer (36) aufweist, der eine durch das Teilungsorgan (16) gebildete Rollen-Gruppe (18) an deren Rückseite erfaßt und mit dem Zwischenförderer (19) weitertransportiert.

7. Vorrichtung nach Anspruch 2 oder einem der weiteren Ansprüche, **dadurch gekennzeichnet, daß** die Fördergeschwindigkeit des Teilungsorgans (16) und die des Zwischenorgans (19) mindestens während der Bildung der Rollen-Gruppe (18) übereinstimmen.

8. Vorrichtung nach Anspruch 2 oder einem der weiteren Ansprüche, **dadurch gekennzeichnet, daß** im Bereich des Speichers (21) bzw. im Bereich des Zwischenförderers (19) ein bewegbarer Anschlag (37) angeordnet ist zur exakten Positionierung einer Rollen-Gruppe (18) zum Einfördern in den Speicher (21).

9. Vorrichtung nach Anspruch 2 oder einem der weiteren Ansprüche, **dadurch gekennzeichnet, daß** für die Rückführung einer Rollengruppe (18) aus dem Speicher (21) in den Transportprozeß zur Stapelstation (11) die Rollen-Gruppe (18) vom Speicher (21) auf dem Zwischenförderer (19) absetzbar und durch diesen auf die Transportgeschwindigkeit des Abförderers (28) beschleunigbar ist, wobei ein Mitnehmer (36) des Zwischenförderers die auf diesem abgelegt Rollengruppe (18) rückseitig erfaßt.

## Claims

1. Process for handling cylindrical objects, namely rolls (10), which are transported crosswise on a feed conveyor (13), are accumulated in a closely packed layer (17) upstream of a dividing element (16), the dividing element (16) forming groups of rolls (10) arranged one beside the other in a closely packed layer (17), namely roll groups (18), and said groups of rolls being fed to a removal conveyor (28), it being the case that
a) a roll group (18) formed by the dividing element (16) is transported by an intermediate conveyor (19), which follows the dividing element (16);
b) the roll group (18) is transferred to the removal conveyor (28), which follows the intermediate conveyor (19);
c) for the purpose of compensating for conveying fluctuations, roll groups (18), as required, are conveyed into a store (21), which is arranged above the intermediate conveyor (19), and removed from the store (21);
d) the dividing element (16) receives a certain, predetermined and adjustable number of rolls (10) and deposits them as a roll group (18) on the intermediate conveyor (19); and it being the case that
e) the roll groups (18) are positioned one above the other in the store (21), each layer in the store (21) corresponding to a complete roll group (18).

2. Apparatus for handling cylindrical objects, namely rolls (10), having a feed conveyor (13) on which the rolls (10) can be transported crosswise, having a dividing element (16) upstream of which the rolls (10) can be accumulated in a closely packed layer (17) and which forms roll groups (18) with a specific number of rolls (10) resting closely against one another, and having a removal conveyor (28) to which the roll groups (18) can be fed, having the following features:
a) the dividing element (16) is followed by an intermediate conveyor (19) for receiving the roll group (18) formed by the dividing element (16) in each case, the intermediate conveyor (19) running between the dividing element (16) and the removal conveyor (28);
b) arranged above the intermediate conveyor (19) is a store (21) into which, for the purpose of compensating for conveying fluctuations, roll groups (18) can be introduced as required and from which roll groups (18) can be removed as required;
c) the dividing element (16) receives a certain, predetermined and adjustable number of rolls (10) and deposits them as a roll group (18) on the intermediate conveyor (19),
d) the roll groups (18) are positioned one above the other in the store (21), each layer in the store (21) corresponding to a complete roll group (18).

3. Apparatus according to Claim 2, **characterized in that** the dividing element (16) comprises a dividing wheel (29) which can be driven in a controlled manner and has receiving means, in particular hollows (30), for gripping in each case one roll (10), the dividing wheel (29) dividing off rolls (10) one after the other from the closely packed layer (17) until a roll group (18) is formed, and **in that** the dividing wheel (29) then briefly comes to a standstill.

4. Apparatus according to Claim 3 or one of the further claims, **characterized in that** the dividing wheel (29), which is mounted rotatably above the movement path of the rolls (10), in particular in the region of the transition between the feed conveyor (13) and the intermediate conveyor (19), interacts with a mating element arranged on the underside of the movement path of the rolls (10), in particular with two spaced-apart dividing discs (32, 33) which are provided, along the circumference, with mating hollows (34) for receiving the rolls (10).

5. Apparatus according to Claim 2 or one of the further claims, **characterized in that** the rolls (10) can be transferred from the feed conveyor (13) to the intermediate conveyor (19) by the dividing element (16), it preferably being the case that the conveying plane for the rolls in the region of the intermediate conveyor (19) is at a slightly lower level than the conveying plane in the region of the feed conveyor (13).

6. Apparatus according to Claim 2 or one of the further claims, **characterized in that** the intermediate conveyor (19) has at least one carry-along element (36), which grips the rear side of a roll group (18) formed by the dividing element (16) and transports said roll group further on the intermediate conveyor (19).

7. Apparatus according to Claim 2 or one of the further claims, **characterized in that** the conveying speed of the dividing element (16) and that of the intermediate conveyor (19) coincide at least during the formation of the roll group (18).

8. Apparatus according to Claim 2 or one of the further claims, **characterized in that** a movable stop (37) is arranged in the region of the store (21), or in the region of the intermediate conveyor (19), for the purpose of positioning a roll group (18) precisely so that it can be conveyed into the store (21).

9. Apparatus according to Claim 2 or one of the further claims, **characterized in that**, for the purpose of returning a roll group (18) from the store (21) into the transporting process to the stacking station (11), the roll group (18) can be deposited on the intermediate conveyor (19) from the store (21) and can be accelerated, by said intermediate conveyor, to the transporting speed of the removal conveyor (28), a carry-along element (36) of the intermediate conveyor gripping the rear side of the roll group (18) deposited on said intermediate conveyor.

## Revendications

1. Procédé de manipulation d'objets cylindriques, plus précisément de rouleaux (10), qui sont transportés sur un transporteur d'amenée (13) leur axe orienté transversalement et sont accumulés en une couche serrée (17) devant un organe diviseur (16), l'organe diviseur (16) formant des groupes, plus précisément des groupes (18) de rouleaux (10) juxtaposés en couche serrée (17), et menant ces groupes à un transporteur d'évacuation (28),
a) un groupe de rouleaux (18) formé par l'organe diviseur (16) étant transporté par un transporteur intermédiaire (19) qui fait suite à l'organe diviseur (16),
b) le groupe de rouleaux (18) étant transféré au transporteur d'évacuation (28), qui fait suite au transporteur intermédiaire (19),
c) des groupes de rouleaux (18) étant, pour la compensation des fluctuations de transport, introduits suivant les besoins dans un magasin (21) placé au-dessus du transporteur intermédiaire (19) et extraits suivant les besoins de ce magasin (21),
d) l'organe diviseur (16) prenant un nombre déterminé, fixé à l'avance et réglable de rouleaux (10) et les déposant sous forme de groupe de rouleaux (18) sur le transporteur intermédiaire (19), et
e) les groupes de rouleaux (18) étant placés dans le magasin (21) les uns au-dessus des autres, chaque couche dans le magasin (21) correspondant à un groupe de rouleaux (18) complet.

2. Dispositif de manipulation d'objets cylindriques, plus précisément de rouleaux (10), comportant un transporteur d'amenée (13) sur lequel les rouleaux (10) peuvent être transportés leur axe orienté transversalement, un organe diviseur (16) devant lequel les rouleaux (10) peuvent être accumulés en couche serrée (17) et qui forme des groupes (18) d'un nombre déterminé de rouleaux (10) juxtaposés de manière serrée, et un transporteur d'évacuation (28) auquel les groupes de rouleaux (18) peuvent être menés,
ayant les caractéristiques suivantes :
a) l'organe diviseur (16) est suivi d'un transporteur intermédiaire (19) destiné à recevoir le groupe de rouleaux (18) formé chaque fois par l'organe diviseur (16), ce transporteur intermédiaire (19) s'étendant entre l'organe diviseur (16) et le transporteur d'évacuation (28),
b) au-dessus du transporteur intermédiaire (19) est placé un magasin (21) dans lequel des groupes de rouleaux (18) peuvent être introduits suivant les besoins pour la compensation des fluctuations de transport, et d'où des groupes de rouleaux (18) peuvent être extraits suivant les besoins,
c) l'organe diviseur (16) prend un nombre déterminé, fixé à l'avance et réglable de rouleaux (10) et les dépose sous forme de groupe de rouleaux (18) sur le transporteur intermédiaire (19),
5. les groupes de rouleaux (18) sont placés dans le magasin (21) les uns au-dessus des autres, chaque couche dans le magasin (21) correspondant à un groupe de rouleaux (18) complet.

3. Dispositif selon la revendication 2, **caractérisé par le fait que** l'organe diviseur (16) est constitué d'une roue diviseuse pouvant être actionnée de manière commandée (29) pourvue de récepteurs, en particulier d'auges (30), destinés à saisir chacun un rouleau (10), cette roue diviseuse (29) séparant des rouleaux (10) l'un après l'autre de la couche serrée (17) jusqu'à la formation d'un groupe de rouleaux (18) et étant ensuite arrêtée pendant une courte durée.

4. Dispositif selon la revendication 3 ou une des autres revendications, **caractérisé par le fait que** la roue diviseuse (29), montée tournante au-dessus de la trajectoire des rouleaux (10) en particulier dans la zone de transition entre le transporteur d'amenée (13) et le transporteur intermédiaire (19), coopère avec un contre-organe placé sur le dessous de la trajectoire des rouleaux (10), en particulier avec deux disques diviseurs espacés (32, 33) pourvus sur leur pourtour de contre-auges (34) destinées à recevoir les rouleaux (10).

5. Dispositif selon la revendication 2 ou une des autres revendications, **caractérisé par le fait que** l'organe diviseur (16) peut transférer les rouleaux (10) du transporteur d'amenée (13) au transporteur intermédiaire (19), le plan de transport des rouleaux dans la zone du transporteur intermédiaire (19) étant de préférence placé légèrement plus bas que le plan de transport dans la zone du transporteur d'amenée (13).

6. Dispositif selon la revendication 2 ou une des autres revendications, **caractérisé par le fait que** le transporteur intermédiaire (19) présente au moins un entraîneur (36) qui saisit sur son côté arrière un groupe de rouleaux (18) formé par l'organe diviseur (16) et le transporte avec le transporteur intermédiaire (19).

7. Dispositif selon la revendication 2 ou une des autres revendications, **caractérisé par le fait que** la vitesse de transport de l'organe diviseur (16) et celle du transporteur intermédiaire (19) concordent au moins pendant la formation du groupe de rouleaux (18).

8. Dispositif selon la revendication 2 ou une des autres revendications, **caractérisé par le fait que**, dans la zone du magasin (21) ou dans la zone du transporteur intermédiaire (19), est placé une butée mobile (37) pour le positionnement exact d'un groupe de rouleaux (18) pour son introduction dans le magasin (21).

9. Dispositif selon la revendication 2 ou une des autres revendications, **caractérisé par le fait que** pour le renvoi d'un groupe de rouleaux (18) du magasin (21) dans le processus de transport jusqu'au poste d'empilage (11), le groupe de rouleaux (18) peut être déposé du magasin (21) sur le transporteur intermédiaire (19) et accéléré par celui-ci jusqu'à la vitesse de transport du transporteur d'évacuation (28), un entraîneur (36) du transporteur intermédiaire saisissant sur son côté arrière le groupe de rouleaux (18) déposé sur ce transporteur.
